**Europäisches Patentamt**

**European Patent Office**

**Office européen des brevets**

(11) Veröffentlichungsnummer: **0 042 917**
**B1**

(12) **EUROPÄISCHE PATENTSCHRIFT**

(45) Veröffentlichungstag der Patentschrift:
**19.02.86**

(21) Anmeldenummer: **81102527.9**

(22) Anmeldetag: **03.04.81**

(51) Int. Cl.⁴: **G 01 D 5/243**, G 01 D 3/02,
G 01 D 18/00

(54) Digitales Längen- oder Winkelmesssystem.

(30) Priorität: **30.06.80 DE 3024716**

(43) Veröffentlichungstag der Anmeldung:
**06.01.82 Patentblatt 82/1**

(45) Bekanntmachung des Hinweises auf die Patenterteilung:
**19.02.86 Patentblatt 86/8**

(84) Benannte Vertragsstaaten:
**AT CH FR GB IT LI NL SE**

(56) Entgegenhaltungen:
**DE - A - 2 703 932**
**DE - A - 2 729 697**
**DE - A - 2 804 678**
**DE - B - 2 549 222**

**IBM TECHNICAL DISCLOSURE BULLETIN, Band 15, Nr. 6, November 1972, Seiten 1869,1870, New York (USA); F.J. SOYCHAK et al.: "General purpose monolithic memory linearizer"**

(73) Patentinhaber: **Dr. Johannes Heidenhain GmbH, Nansenstrasse 17, D-8225 Traunreut (DE)**

(72) Erfinder: **Schwefel, Ernst, Dipl.-Phys., Reichenbergweg 2, D-8225 Traunreut (DE)**

## Beschreibung

Die Erfindung betrifft ein digitales Längen- oder Winkelmesssystem gemäss dem Oberbegriff des Anspruchs 1.

Gemäss der DE-A- 27 29 697 werden zur Interpolation, d.h. zur Unterteilung einer Signalperiode, die durch die Gitterkonstante des inkrementalen Gittermassstabs bestimmt wird, in eine Vielzahl von Digitalschritten, mindestens ein von der Abtasteinheit erzeugtes Analogsignal mittels eines Umsetzers digitalisiert und die Digitalwerte einem Digitalrechner zur Berechnung von Interpolationswerten innerhalb der Signalperiode zugeführt. In den Digitalrechner werden auch das Zählergebnis eines Vorwärts-/Rückwärtszählers und ein binäres Steuersignal eingespeist. An einer Anzeigeeinheit können Positionswerte, die die Relativlage zweier zu messender Objekte angeben, in numerischer Form abgelesen werden. Der Digitalrechner bewirkt dabei eine Synchronisation zwischen der Anzeige der Werte der vollen Signalperiode und der Interpolationswerte.

Bei einem hohen Unterteilungsfaktor ist zur Auswertung phasenverschobener Analogsignale eine Optimierung hinsichtlich der Parameter Symmetrie (Eliminierung des Gleichspannungsanteils), Amplitudengleichheit und geforderter Phasendifferenz zwischen den Analogsignalen unerlässlich. Zu diesem Zweck werden bei der DE-A-27 29 697 vor der Durchführung des Interpolationsvorgangs an den eingegebenen Digitalwerten im Digitalrechner noch Korrekturen bezüglich dieser Parameter vorgenommen. Die Korrekturwerte werden dabei einer vorab erstellten, im Digitalrechner eingespeicherten Korrekturtabelle entnommen.

Der Erfindung liegt die Aufgabe zugrunde, bei einem digitalen Längen- oder Winkelmesssystem der eingangs erwähnten Gattung derartige Korrekturen weiter zu vereinfachen.

Diese Aufgabe wird erfindungsgemäss durch die kennzeichnenden Merkmale des Anspruchs 1 gelöst.

Eine Ausgestaltung der Erfindung entnimmt man dem abhängigen Anspruch 2.

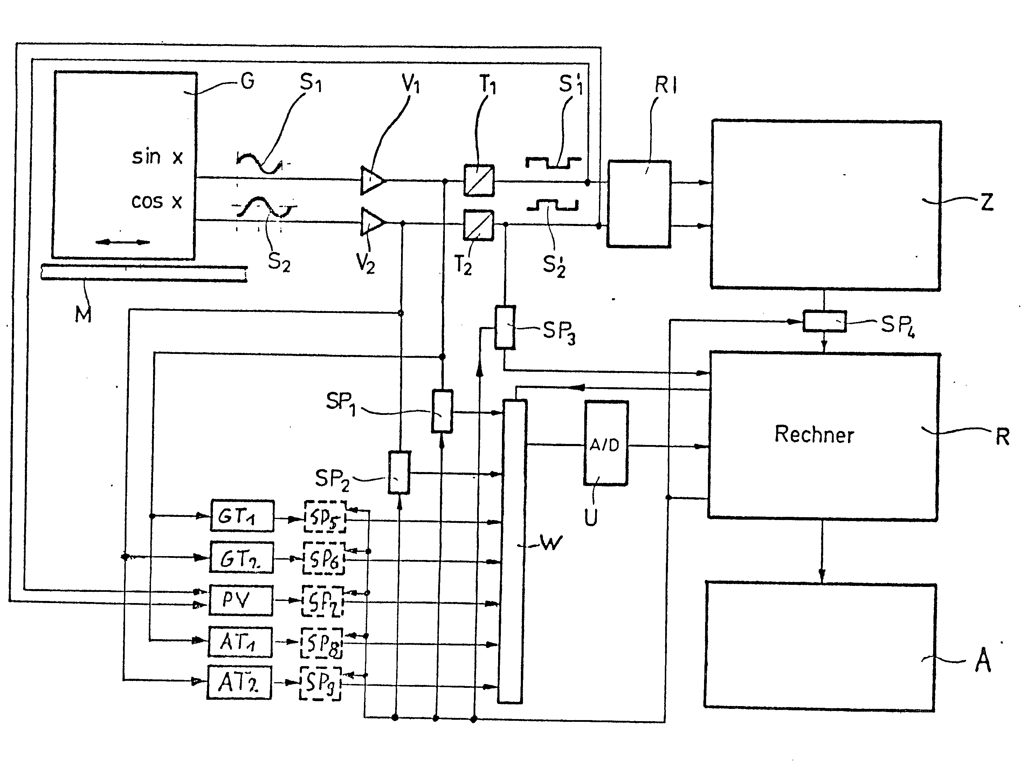

Ein Ausführungsbeispiel der Erfindung wird anhand der Zeichnung näher erläutert.

Mit G, M ist ein lineares inkrementales Messsystem bezeichnet; G bezeichnet die Abtasteinheit, M den Gittermassstab. Die vorgenannten Teile G, M können am Bett bzw. am Schlitten z.B. einer Bearbeitungs- oder Messmaschine angebracht sein. Die Abtasteinheit G und der Gittermassstab M sind in der gezeigten Pfeilrichtung relativ zueinander verschiebbar. Die Abtasteinheit G enthält eine Gitterabtastplatte, eine Beleuchtungseinrichtung und Photoelemente, die den an den Gittern modulierten Lichtstrom in sinusförmige, 90° zueinander phasenversetzte elektrische Ausgangssignale $S_1$, $S_2$ (sin x, cos x) umformen. Die Analogsignale $S_1$, $S_2$ werden Verstärkern $V_1$, $V_2$ sowie Triggern $T_1$, $T_2$ zugeführt und in Rechtecksignale $S_1'$, $S_2'$ umgeformt. RI bezeichnet einen Richtungsdiskriminator und Z einen elektronischen Vorwärts-/Rückwärtszähler, der vom Richtungsdiskriminator RI erzeugte Impulse vorzeichenrichtig zählt.

Zur Interpolation, d.h. zur Unterteilung einer Signalperiode in eine Vielzahl von Digitalschritten wird ein Digitalrechner R verwendet. Bevorzugt findet dabei ein Mini- oder Mikrocomputer Anwendung.

Die in der Zeichnung dargestellte Anordnung gestattet eine Interpolation während der Bewegung des Messsystems G, M. Die durch die Verstärker $V_1$, $V_2$ verstärkten Analogsignale $S_1$, $S_2$ werden jeweils einer sogenannten Sample and Hold-Schaltung $SP_1$, $SP_2$ zugeführt, die an einen elektronischen Schalter W angeschaltet sind, welcher, gesteuert vom Digitalrechner R, die Speicher $SP_1$, $SP_2$ wechselweise an einen Analog-Digital-Umsetzer U anschliesst. Die Analogsignale $S_1$, $S_2$ werden mittels des Umsetzers U digitalisiert und die Digitalwerte in den Digitalrechner R zur Errechnung von Interpolationswerten innerhalb einer Signalperiode eingegeben. In den Digitalrechner R werden auch das Zählergebnis des Vorwärts-/Rückwärtszählers Z über einen Speicher $SP_4$ und ein binäres Steuersignal $S_2'$ am Ausgang des Triggers $T_2$ über einen Speicher $SP_3$ eingegeben. An der Zifferanzeigeeinheit A können Positionswerte, die die jeweilige Relativlage von Massstab M und Abtasteinheit G angeben, in numerischer Form abgelesen werden. Der Digitalrechner R bewirkt dabei eine Synchronisation zwischen der Anzeige der Werte der vollen Signalperiode und der Interpolationswerte.

Die Speicher $SP_1$, $SP_2$, $SP_3$, $SP_4$ werden im Ausführungsbeispiel über den Digitalrechner R gesteuert. Die Steuerung der vorgenannten Speicher $SP_1$, $SP_2$, $SP_3$, $SP_4$ kann auch extern erfolgen.

Bei einem hohen Unterteilungsfaktor, der durch den Digitalrechner R realisierbar ist, wird zweckmässig vor Anwendung des Interpolationsalgorithmus an den Digitalwerten noch eine Korrektur vorzugsweise auf Symmetrie, Amplitudengleichheit und 90°-Phasenversatz vorgenommen. Die mittels der Verstärker $V_1$, $V_2$ verstärkten Analogsignale $S_1$, $S_2$ werden Gleichspannungsdetektoren $GT_1$, $TG_2$ zur Ermittlung der jeweiligen Gleichspannungsanteile und Amplitudendetektoren $AT_1$, $AT_2$ zur Ermittlung der jeweiligen Amplitudenhöhen zugeführt. Zur Ermittlung der Phasendifferenz werden die Rechtecksignale $S_1'$, $S_2'$ einem Phasenvergleicher PV zugeleitet. Die Ausgänge der Elemente $GT_1$, $GT_2$, $AT_1$, $AT_2$, PV sind mit Eingängen des elektronischen Schalters W verbunden.

Die Korrekturwerte werden in wenigstens einem Durchlauf über die gesamte Messlänge mittels der Elemente $GT_1$, $GT_2$, $AT_1$, $AT_2$, PV automatisch ermittelt und über den Schalter W suksessive vom Umsetzer U digitalisiert und im Rechner R in Form einer Korrekturtabelle gespeichert. Im Messbetrieb werden dann diese gespeicherten Korrekturwerte bei der Interpolation vom Rechner R automatisch verwertet.

Zwischen den Elementen $GT_1$, $GT_2$, $AT_1$, $AT_2$, PV und dem Schalter W sind vorzugsweise jeweils

Analogspeicher SP$_5$–SP$_9$ vorgesehen, die vom Digitalrechner R gesteuert werden.

Die Erfindung ist auch bei dreieckförmigen Analogsignalen anwendbar und kann auch in Verbindung mit induktiven, magnetischen und kapazitiven Messsystemen eingesetzt werden.

**Patentansprüche**

1. Digitales Längen- oder Winkelmesssystem zur Bestimmung von digitalen Längen- oder Winkelmesswerten, mit
– einem Messteilungsträger (M),
– einer relativ zu dem Messteilungsträger (M) beweglichen, die Messteilung des Messteilungsträgers (M) abtastenden Abtasteinheit (G) zur Erzeugung von periodischen elektrischen Analogsignalen (S$_1$, S$_2$),
– einem Umsetzer (U) zur Umsetzung der Analogsignale (S$_1$, S$_2$) in Digitalwerte,
– einem Digitalrechner (R) zur Durchführung einer Interpolation der Digitalwerte, der eine Korrekturtabelle mit gespeicherten Korrekturwerten zur Eliminierung des Gleichspannungsanteiles der Analogsignale (S$_1$, S$_2$), zur Herstellung der Amplitudengleichheit der Analogsignale (S$_1$, S$_2$) und zur Einstellung einer vorbestimmten Phasendifferenz der Analogsignale (S$_1$, S$_2$) aufweist, wobei vor der Durchführung der Interpolation die Digitalwerte durch die Korrekturwerte korrigierbar sind, und
– einer Auswerte-Ziffernanzeigeeinheit (A),
dadurch gekennzeichnet, dass gesonderte, von den Analogsignalen (S$_1$, S$_2$) beaufschlagte Gleichspannungs (GT$_1$, GT$_2$)-, Amplituden (AT$_1$, AT$_2$)- und Phasenvergleichs (PV)-Detektorelemente zur selbsttätigen Ermittlung der Korrekturwerte vorgesehen sind, die in wenigstens einem Durchlauf der Abtasteinheit (G) über die gesamte Messlänge oder den gesamten Messwinkel die genannten Korrekturwerte über den Umsetzer (U) an den Digitalrechner (R) liefern, der diese Korrekturwerte in der Korrekturtabelle einspeichert.

2. Messsystem nach Anspruch 1, dadurch gekennzeichnet, dass zwischen den Detektorelementen (GT$_1$, GT$_2$, AT$_1$, AT$_2$, PV) und dem Umsetzer (U) Analogspeicher (SP$_5$–SP$_9$) vorgesehen sind, die die Korrekturwerte erst nach Abruf, vorzugsweise durch den Digitalrechner (R), speichern.

**Claims**

1. Digital length or angle measuring system for determining digital length or angle measurement values, comprising
– a measurement graduation carrier (M),
– a scanning unit (G) which can be moved relative to the measurement graduation carrier (M) and which scans the measurement graduation of the measurement graduation carrier (M), for generating periodic electrical analogue signals (S$_1$, S$_2$),
– a converter (U) for converting the analogue signals (S$_1$, S$_2$) into digital values,
– a digital computer (R) for effecting an interpolation of the digital values, which is provided with a correction table with stored correction values for eliminating the direct-voltage component of the analogue signals (S$_1$, S$_2$), for producing amplitude equality of the analogue signals (S$_1$, S$_2$) and for setting a predetermined phase difference of the analogue signals (S$_1$, S$_2$), in which arrangement the digital values can be corrected by the correction values before the interpolation is effected, and
– an evaluating number display unit (A),
characterised in that separate direct-voltage (GT$_1$, GT$_2$), amplitude (AT$_1$, AT$_2$) and phase comparison (PV) detector elements, to which the analogue signals (S$_1$, S$_2$) are applied, are provided for automatic determination of the correction values, which elements supply in at least one pass of the scanning unit (G) over the entire measurement length or the entire measurement angle the said correction values via converter (U) to the digital computer (R) which stores these correction values in the correction table.

2. Measurement system according to Claim 1, characterised in that between the detector elements (GT$_1$, GT$_2$, AT$_1$, AT$_2$, PV) and the converter (U), analogue memories (SP$_5$–SP$_9$) are provided which store the correction values only after call-up, preferably by the digital computer (R).

**Revendications**

1. Système de mesure numérique de longueurs ou d'angles, pour la détermination de valeurs de mesure de longueurs ou d'angles, avec
– un support de graduation de mesure (M),
– une unité d'exploration (G) mobile relativement au support de graduation de mesure (M) et balayant la graduation de mesure dudit support (M) pour engendrer des signaux analogiques électriques périodiques (S$_1$, S$_2$),
– un convertisseur (U) pour convertir les signaux analogiques (S$_1$, S$_2$) en des valeurs numériques,
– pour effectuer une interpolation des valeurs numériques, un calculateur numérique (R) qui comporte une table de correction avec des valeurs de correction mémorisées pour l'élimination de la part de tension continue des signaux analogiques (S$_1$, S$_2$), la réalisation de l'égalité d'amplitude des signaux analogiques (S$_1$, S$_2$) et le réglage d'une différence de phases prédéterminée des signaux analogiques (S$_1$, S$_2$), les valeurs numériques étant corrigibles par les valeurs de correction avant l'exécution de l'interpolation,
– une unité d'évaluation et d'indication en chiffres (A),
caractérisé par le fait qu'il comporte, pour la détermination automatique des valeurs de correction, des éléments détecteurs de tension continue (GT$_1$, GT$_2$), d'amplitude (AT$_1$, AT$_2$) et de comparaison de phases (PV) séparés, soumis à l'action des signaux analogiques (S$_1$, S$_2$), lesquels éléments détecteurs fournissent à travers le convertisseur (U) en au moins un passage de l'unité d'exploration (G) sur toute la longueur de mesure ou sur tout l'angle de mesure les valeurs de correction précitées au calculateur numérique (R), qui mémorise ces valeurs de correction dans la table de correction.

2. Système de mesure selon la revendication 1, caractérisé par le fait qu'il comporte, entre les éléments détecteurs (GT$_1$, GT$_2$, AT$_1$, AT$_2$, PV) et le convertisseur (U), des mémoires analogiques (SP$_5$–SP$_9$) qui mémorisent les valeurs de correction seulement sur appel, de préférence du compteur numérique (R).

0 042 917